# EUROPÄISCHE PATENTSCHRIFT

(11) **EP 3 414 796 B1**
(45) Veröffentlichungstag und Bekanntmachung des Hinweises auf die Patenterteilung: **22.07.2020**
(21) Anmeldenummer: 17702838.8
(22) Anmeldetag: 30.01.2017
(51) Int. Cl.: H01R 4/02, H01R 13/03, H01R 13/41, H01R 43/16, H01R 13/24

(54) **KONTAKTELEMENT UND VERFAHREN ZUM AUSBILDEN EINES KONTAKTELEMENTES**
A CONTACT ELEMENT AND METHOD FOR FORMATION OF A CONTACT ELEMENT
ÉLÉMENT DE CONTACT ET PROCÉDÉ DE FORMATION D'UN ÉLÉMENT DE CONTACT

(30) Priorität: 12.02.2016 DE 102016202184
(43) Veröffentlichungstag der Anmeldung: 19.12.2018
(73) Patentinhaber: Robert Bosch GmbH, 70442 Stuttgart (DE)
(72) Erfinder: LUDWIG, Ronny, 72770 Reutlingen (DE); DOOTZ, Rolf, 28080 Madrid (ES)
(86) Internationale Anmeldenummer: PCT/EP2017/051897
(87) Internationale Veröffentlichungsnummer: WO 2017/137273

(56) Entgegenhaltungen:
- WO-A1-2009/071381
- WO-A1-2014/068005
- US-A- 5 074 039
- US-A1- 2004 266 272
- US-A1- 2014 087 592
- US-A1- 2014 199 861

## Beschreibung

Die Erfindung betrifft ein Kontaktelement, einen das Kontaktelement umfassenden Sensor sowie ein Verfahren zur Ausbildung des Kontaktelementes gemäß den Oberbegriffen der unabhängigen Ansprüche.

### Stand der Technik

In verschiedenen Anwendungen sind beispielsweise Sensoren bekannt, welche zur gehäuseinneren Kontaktierung der Kunden-Stecker-Schnittstelle mit einer eine entsprechende Sensorelektronik aufweisenden Leiterplatte mittels eines Kontaktelementes elektrisch kontaktiert sind. Das Kontaktelement umfasst hierbei Kontaktsegmente, welche zur Ausbildung der elektrischen Kontaktierung in verschiedenen Ausführungsformen vorgesehen sein können. Beispielhafte Ausführungsformen sind Einpress-, Löt-, Schweiß- oder Bondkontakte.

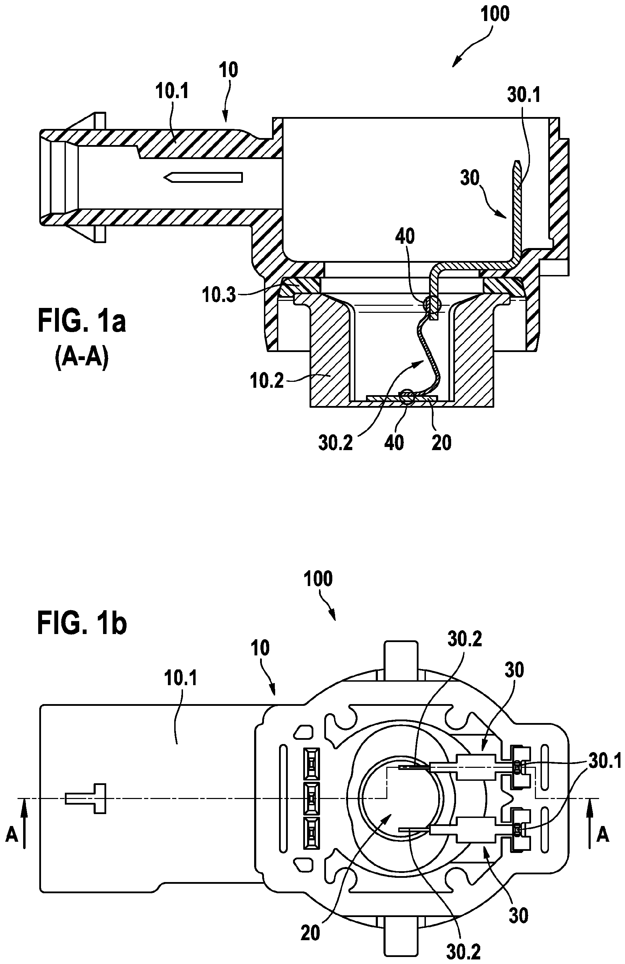

In den Fig. 1a und 1b ist ein gemäß dem Stand der Technik bekannter Ultraschallsensor 100 in einer geschnittenen Seitenansicht und in einer Draufsicht gezeigt. Ein solcher Ultraschallsensor 100 umfasst ein Sensorgehäuse 10, welches mehrteilig ausgebildet ist, beispielsweise aus einem Grundgehäuse 10.1 und einem über einen Montage- und/oder Entkopplungsring 10.3 unterseitig angebrachten metallischen Membrantopf 10.2. Im Inneren des metallischen Membrantopfes 10.2 ist am Bodengrund ein Piezo-Schwinger als Sensorelement 20 angeordnet. Darüber hinaus sind im Grundgehäuse 10.1 zwei Kontaktelemente 30 montiert, welche entsprechende Elektroden des Sensorelementes 20 jeweils mit einer Leiterplatte einer Sensorelektronikeinheit (nicht dargestellt) verbinden. Ein solches Kontaktelement 30 ist beispielsweise als ein Stanzbiegeteil ausgebildet und weist ein Kontaktsegment 30.1 auf, welches als Einpresspin 30.1 ausgebildet ist. Dieser stellt unter Ausbildung eines Einpresskontaktes eine elektrische Kontaktierung mit der Leiterplatte her. Da der Piezo-Schwinger 20 aufgrund seiner Größe und Schnittstelle sowie aus funktionalen Gründen (z.B. akustische Dämpfung) nicht direkt mit einem massiven Grundkörper des Kontaktelementes 30 verbunden werden kann, erfolgt eine elektrische Kontaktierung zwischen dem Kontaktelement 30 und dem Piezo-Schwinger 20 mittels eines dünnen, beispielsweise 80µ dicken Cu-Drahtes, welcher somit ein weiteres Kontaktsegment 30.2 des Kontaktelementes 30 in Form eines Kontaktdrahtes bildet.

Dieser Cu-Draht 30.2 kann entweder über einen selektiven Lötprozess sowohl am massiven Grundkörper des Kontaktelementes 30 als auch am Piezo-Schwinger 20 angebracht werden. Alternativ ist es ermöglicht eine elektrische Kontaktierung über einen Bond- und Schweißprozess, wie z.B. dem Thermokompressionsschweißen, herzustellen. Eine solche elektrische Kontaktierung liegt somit beispielsweise in Form eines Lot- oder Thermoschweisskontaktes 40 vor. In einem montierten Zustand des Ultraschallsensors 100 weist der Cu-Draht einen geschwungenen S-Verlauf auf, um eine mechanische und/oder akustische Entkopplung zum Kontaktelement 30 zu bewirken.

Da sowohl das Löten als auch das Thermokompressionsschweißen sowie das Formen des entsprechenden Draht-Loops aufgrund der engen Bauraumverhältnisse nur außerhalb des vormontierten Sensorgehäuses erfolgen kann, ist die gesamte Prozessführung sehr aufwendig und benötigt zudem sehr teure Fertigungstechnik. Auch ein Entkoppeln der verschiedenen Prozessschritte ist damit nicht möglich.

Ein solcher gekoppelter Prozessverlauf ergibt sich wie nachfolgend:
A) Positionieren von 2 Kontaktelementen 30 und dem Piezo-Schwinger 20 außerhalb des Sensorgehäuses 10 auf einem entsprechenden ebenen Träger
B) Ablängen von Cu-Lackdrahtsegmenten und Positionierung dieser zu jeweils einem Grundkörper des Kontaktelementes 30 und dem Piezo-Schwinger 20
C) Thermokompressionsschweißen des Cu-Drahtes 30.2 unter Ausbildung jeweils eines Thermoschweisskontaktes 40 einerseits hin zum Grundkörper eines jeweiligen Kontaktelementes 30 und andererseits hin zum Piezo-Schwinger 20
D) Anwinkeln der beiden Kontaktelemente 30 um 90° relativ zum Piezo-Schwinger 20, wobei dabei gleichzeitig Draht-Loops in den Cu-Drähten 30.2 ausgeformt werden
E) Gleichzeitige Montage der beiden Kontaktelemente 30 sowie des Piezo-Schwingers 20 in ein vormontiertes Sensorgehäuse 10, welches zumindest das Grundgehäuse 10.1, den metallischen Membrantopf 10.2 und den Montage-und/oder den Entkopplungsring 10.3 umfasst.

Ein solcher Fertigungsaufwand ergibt sich in vergleichbarer Weise bei der Kontaktierung von verschiedenen Arten von Sensoren, welche aus Bau- oder Funktionsgründen eine Kontaktierung durch ein massives Kontaktelement nicht zulassen.

Ferner ist aus der WO 2014/068005 A1 eine Kontaktvorrichtung zur Kontaktierung mit einer Leiterplate bekannt.

Ferner zeigt die US 5 074 039 A ein Verfahren zur Ausbildung eines Kontaktelements.

Die WO 2009/071381 A1 zeigt ferner ein Anschlusselement zur elektrischen Verbindung eines Magnetventils mit einer Leiterplatte.

Die Offenlegungsschrift US2014087592 zeigt ein Kontaktierungselement mit einem ersten und zweiten Kontaktabschnitt, welche über einen Pufferabschnitt miteinander verbunden sind. Der Pufferabschnitt ist dabei als elastisch nachgiebiger Abschnitt ausgeführt, welcher einen Lageversatz der Kontaktabschnitte bei einer Kontaktierung durch eine nachgiebige Verformung ausgleicht.

Die Offenlegungsschrift US2004266272 A1 zeigt ein elastisch nachgiebiges Kontaktelement mit zwei endseitigen Elektroden. Mittels den Elektroden wird ein Halbleiterelement mit einer Testschaltung elektrisch kontaktiert. Hierfür ist das Kontaktelement elastisch ausgebildet mit einem Abschnitt in Form einer Druckfeder, so dass eine Kontaktierung über die Elektroden mittels eines entsprechenden Kontaktdrucks erfolgt.

### Offenbarung der Erfindung

Der Erfindung liegt die Aufgabe zu Grunde, eine Kontaktierung von Sensoren zu vereinfachen und einen Fertigungsaufwand für die Sensoren zu verringern.

Diese Aufgabe wird durch ein Kontaktelement, einen das Kontaktelement umfassenden Sensor sowie ein Verfahren zur Ausbildung des Kontaktelementes mit den Merkmalen der unabhängigen Ansprüche gelöst.

Die Erfindung geht aus von einem Kontaktelement, umfassend einen Grundkörper aus einem Band- und/oder Blechmaterial und zumindest ein mit dem Grundkörper verbundenes Kontaktsegment, welches ausgebildet ist, das Kontaktelement mit einem Kontaktpartner, insbesondere einem elektrischen und/oder elektronischen Bauelement, elektrisch zu kontaktieren. Dabei ist das zumindest eine Kontaktsegment als drahtförmiger Fortsatz ausgeführt, welcher einstückig mit dem Grundkörper aus dem Band- und/oder Blechmaterial gebildet ist. Ferner bildet der drahtförmige Fortsatz mit zumindest seinem einen Ende einen Übergangsbereich aus, welcher an den Grundkörper anschließt. Auf diese Weise ist beispielweise der bisher zur Kontaktierung eines Sensorelementes 20 in den Fig. 1a und 1b gezeigte Kontaktdraht 30.2 durch den drahtförmigen Fortsatz substituiert und als Kontaktsegment integral im Kontaktelement ausgebildet. Dadurch ergibt sich der Vorteil, dass eine bisherige Anforderung an eine ansonsten vorliegende Verbindungstelle innerhalb des Kontaktelementes selbst entfällt. Dies führt zu einer deutlich vereinfachten Prozessführung in Ausbildung eines Sensors, bei welchem ein Sensorelement mit dem Kontaktelement elektrisch kontaktiert wird. So können diesbezüglich in Hinblick auf den bisherigen Stand der Technik einzelne der zuvor genannten Prozessschritte A) bis E) entfallen und/oder voneinander entkoppelt werden. Zusätzlich ergibt sich der Vorteil, dass zur Kontaktierung des Kontaktelementes insgesamt mit beispielsweise einem Sensorelement eine geeignete Verbindungstechnik nun nur in Abhängigkeit des Grundmaterials des Band-und/oder Blechmaterials festgelegt ist, wodurch sich eine größere Auswahlfreiheit ergibt. Zur Herstellung des drahtförmigen Fortsatzes und/oder des Kontaktelementes insgesamt kommen Fertigungsverfahren in Frage, welche die Ausbildung von Blechteilen, insbesondere aus dünnwandigen Blechen mit einer Blechstärke von 0,2 mm bis 2 mm, bevorzugt mit einer Stärke von 0.4 mm bis 0,8 mm, beispielsweise durch einen Schneidprozess ermöglichen. Bevorzugt ergibt sich das Kontaktelement als ein gestanztes oder ein gelasertes Blechteil. Weiter ist ein Dickenmaß des Band- und/oder Blechmaterials des Kontaktelementes im Bereich des Kontaktsegments gegenüber dem Grundkörper um einen Faktor von 4 bis 6 reduziert. Auf diese Weise kann ein Dickenmaß für den drahtförmigen Fortsatz entsprechend einem Maß eines ansonsten eingesetzten Drahtkontaktes dimensioniert werden. Der Faktor fällt bei größeren Dickenmaßen des Band- und/oder Blechmaterials zunehmend größer aus. Bevorzugt ist das reduzierte Dickenmaß in einem Bereich zwischen 0,05 mm und 0,5 mm, bevorzugt in einem Bereich von 0,05 mm und 0,3 mm, festgelegt. Eine Reduzierung des Dickenmaßes lässt sich insbesondere durch einen ein- oder mehrstufigen Prägeprozess erreichen. In diesem Zusammenhang ist im Übergangsbereich des drahtförmigen Fortsatzes zumindest eine Prägestufe ausgebildet. Durch ein Abprägen des Band- und/oder Blechmaterials ergibt sich zusätzlich eine Materialverfestigung, wodurch der drahtförmige Fortsatz trotz seiner Dünnwandigkeit eine hohe mechanische Beanspruchbarkeit zeigt. In Anlehnung an einen Drahtkontakt weist ein Breitenmaß des drahtförmigen Fortsatzes insbesondere das 1 bis 2-fache seines Dickenmaßes auf.
Ferner ist das Band- und/oder Blechmaterial des Kontaktelementes aus einer, insbesondere gewalzten, Bronzelegierung gebildet, beispielsweise aus CuSn6. Ein solches Material weist generell eine hohe Federsteifigkeit auf und hat sich beispielsweise für die Verwendung von Einpresskontakten bewährt. In Vorsehung des drahtförmigen Fortsatzes weist dieser insgesamt viel stärkere elastische Eigenschaften auf als beispielsweise ein Drahtkontakt aus Cu, wodurch die Ausbildung als Federelement weiter optimiert ist.

Durch die in den abhängigen Ansprüchen aufgeführten Maßnahmen sind vorteilhafte Weiterbildungen und Verbesserungen des erfindungsgemäßen Kontaktelementes möglich.

Eine vorteilhafte Ausführungsform des Kontaktelementes sieht vor, dass der drahtförmige Fortsatz mit seinem anderen Ende zur Kontaktierung eines weiteren Kontaktpartners einen Kontaktfuß ausbildet, welcher vom Grundkörper freiliegt. Somit stehen für das Kontaktelement weiterhin alle Kontaktierungsmöglichkeiten offen, welche bereits bei Drahtkontakten allgemein zur Verfügung stehen. Neben der einfachen Ausbildung einer elektrischen Kontaktierung ist durch den zwischen dem Kontaktfuß und dem Übergangsbereich des drahtförmigen Fortsatzes befindlichen Abschnitt eine mechanische Entkopplung zwischen dem massiven Grundkörpers des Kontaktelementes und dem elektrisch kontaktierten Kontaktpartners erreicht. Im Falle eines kontaktierten Ultraschallsensorelementes ergibt sich dadurch eine Dämpfung von sich übertragender akustischer Schwingungen, wodurch eine fehlerfreie Betriebsfunktion des Sensorelementes sichergestellt ist.

In Weiterbildung des Kontaktelementes ist vorgesehen, dass der Kontaktfuß selektiv beschichtet ist, insbesondere mit zumindest einer Schicht aus Ni, Au, Ag und/oder Sn. Eine derartige Schicht kann beispielsweise galvanisch aufgebracht werden. Durch Vorsehen einer solchen selektiven Beschichtung kann eine elektrische Kontaktierung in Anpassung an ein Material des zu kontaktierenden Kontaktpartners und an eine zur Kontaktierung vorgesehene Verbindungstechnik verbessert werden.

Eine weitere Verbesserung ergibt sich dadurch, dass das Kontaktsegment in Form des drahtförmigen Fortsatzes als Federelement ausgebildet ist. Als Federelement weist der drahtförmige Fortsatz unter mechanischer Beanspruchung eine elastische Nachgiebigkeit auf, welche in Abhängigkeit des Anwendungsfalles eine plastische Verformung ausschließen soll. Auf diese Weise ist die zuvor genannte mechanische Entkopplung weiter optimiert. Eine derartige mechanische Entkopplung ist im Stand der Technik gemäß der Fig. 1a und 1b durch einen geschwungenen Formverlaufes des dort eingesetzten Drahtkontaktes erreicht. Allerdings stellt sich der geschwungene Formverlauf erst in einem Endmontagezustand ein, indem ein zuvor geradliniges Drahtelement während eines Montagevorgangs unter Vorspannung gebracht wird. Zum einen verbleibt dadurch eine dauerhafte Krafteinwirkung auf das kontaktierte Sensorelement. Ferner ist ein solcher sich erst ergebende Formverlauf nicht identisch reproduzierbar aufgrund von Abhängigkeiten im Montageprozess. In vorteilhafter Weise weist der drahtförmige Fortsatz bereits einen Formverlauf auf, welcher von einem geradlinigen Formverlauf abweicht. Insbesondere ist dieser Formverlauf in einer Ebene ausgebildet, welcher der ursprünglichen Ebene des Band- und Blechmaterials entspricht. Als vorteilhaft erweist sich, wenn das Federelement bevorzugt durch einen gekrümmten Verlauf des drahtförmigen Fortsatzes geformt ist, insbesondere als S-Form. Insgesamt ergibt sich eine hohe Designfreiheit in der Formgebung eines solchen Federelements, wobei dieses durch eine konstant fixe Formgebung beliebig oft im Wesentlich identisch ausgebildet werden kann. Insbesondere ist dadurch die Formgebung nicht mehr von einem Montageprozess abhängig, wodurch sich eine hohe Prozesssicherheit im Einsatz des Kontaktelementes ergibt. Zusätzlich kann auf diese Weise eine Verbindungstechnik mit einem nicht gleich aushärtbarem Verbindungsmedium, wie beispielsweise einem Leitkleber, zur Kontaktierung des Kontaktelementes mit einem Kontaktpartner zum Einsatz kommen, da nun auch in einem Endmontagezustand nur geringe oder keine Vorspannungskräfte in der Verbindungsstelle wirken.

In Anlehnung an einen Drahtkontakt weist ein Breitenmaß des drahtförmigen Fortsatzes bevorzugt das 1,5-fache seines Dickenmaßes auf. In den meisten Ausführungsformen dürfte eine rechteckige und/oder quadratische Querschnittsform des drahtförmigen Fortsatzes genügen, welche sich einfach beispielsweise durch einen senkrecht zur Ebene des Band- und/oder Blechmaterials gerichteten Schneidprozess ergibt. Durch eine solche Querschnittsform ist ein Dicken- und Breitenmaß eindeutig gegeben. Aufgrund eines Prägeprozesses kann auch eine andersartige Querschnittsform erhalten werden, beispielsweise durch Anfasungen oder Abrundungen. In diesen Fällen ergeben sich die Dicken- und Breitenmaße durch die Kantenabmessungen eines fiktiv senkrecht zur einer der Seitenflächen des Band- und/oder Blechmaterials und senkrecht zu einer Längserstreckung des drahtförmigen Fortsatzes angeordneten Rechteckes, welches die Querschnittsform berührend zu den Außenkanten umschließt.

In vorteilhafter Weiterbildung umfasst das Kontaktelement neben dem als drahtförmigen Fortsatz ausgebildeten Kontaktsegment weiterhin, insbesondere ebenfalls einstückig mit dem Grundkörper ausgebildet, eine Füge- und/oder Rastmöglichkeit zur mechanischen Montage des Kontaktelementes in ein Gehäuse und/oder zumindest ein weiteres Kontaktsegment, wobei das zumindest eine weitere Kontaktsegment als Einpresskontakt ausgebildet ist. Der Einpresskontakt lässt sich durch ansonsten bekannte Fertigungsverfahren innerhalb des Band- und/oder Blechmaterials ausbilden. Da bei der Reduzierung des Dickenmaßes im Bereich des drahtförmigen Fortsatzes eine Materialverfestigung eintritt, ist beispielsweise bei einem Bronze-Grundmaterial des Band- und/oder Blechmaterials dieses im Ausgangszustand mit nur einer geringen Härte (z.B. R350/H080 oder R420/H125) auszuwählen, welche jedoch noch für die Funktion des Einpresskontaktes ausreicht.

Die Erfindung führt auch zu einem Sensor, umfassend ein Sensorgehäuse, ein Sensorelement und ein erfindungsgemäßes Kontaktelement in einer der zuvor beschriebenen Ausführungsformen. Hierbei ist das Sensorelement von dem Kontaktsegment elektrisch kontaktiert, insbesondere über den Kontaktfuß des drahtförmigen Fortsatzes. Beispielsweise kann der Sensor als Ultraschallsensor ausgebildet sein, welcher als Sensorelement insbesondere einen Piezo-Schwinger umfasst. Hierbei können übertragende akustische Schwingungen zwischen dem Grundkörper des Kontaktelementes und dem Sensorelement mittels des drahtförmigen Fortsatzes wirkungsvoll gedämpft werden. Weiterhin gestaltet sich die Montage im Gegensatz zu bisher bekannten Ausführungen vergleichbarer Sensoren sehr einfach durch eine zur Ausbildung einer elektrischen Kontaktierung reduzierte Anzahl von Verbindungsstellen. Weiterhin ist die Montage dadurch vorteilhaft, als dass eine Kontaktierung des Sensorelementes in einem vormontierten Zustand innerhalb eines Sensorgehäuses mit engen Bauraumverhältnissen erfolgen kann. Es ist lediglich der Kontaktfuß an dem freiliegenden Ende des drahtförmigen Fortsatzes in Anlagenkontakt mit einem Anschlussbereich des Sensorelements zu bringen und durch eine geeignete Verbindungstechnik eine dauerhafte Kontaktierung herzustellen. Besonders bevorzugt ist hierfür das Kontaktsegment stoffschlüssig mit dem Anschlussbereich des Sensorelementes verbunden, insbesondere mittels einer Lot-, Klebe-, Bond- oder Schweissverbindung. Für eine Klebung eignet sich insbesondere ein Silberleitkleber, vor allem dann, wenn der Anschlussbereich des Sensorelementes bereits versilbert ist.

In einer vorteilhaften Ausführungsform umfasst das Sensorgehäuse einen Membrantopf, welcher unterseitig zu einem Grundgehäuse angeordnet ist. Hierbei ist am Bodengrund das Sensorelement befestigt, insbesondere über eine Klebeschicht mit dem Bodengrund verbunden. Bevorzugt ist der Membrantopf zum Schutz des Sensorelementes zumindest teilweise mit einer Vergußmasse, beispielsweise einem Silikonschaum, ausgefüllt. Ist zur Kontaktierung des Sensorelementes ein Leitkleber verwendet, können Synergien mit dem nachfolgenden Vergußprozess genutzt werden. Das Verfüllen des Membrantopfes beispielsweise mit einem Silikon-Schaum benötigt einen thermischen Aushärteprozess. Sofern es keine chem. Wechselwirkungen zwischen dem Silberleitklebstoff und dem Silikonschaum gibt, können beide Materialien nass zu nass mit dem gleichen Thermoschritt gehärtet werden.

In einer vorteilhaften Ausführungsform ist das Kontaktelement mittels der Füge-und/oder Rastmöglichkeit an dem Sensorgehäuse montiert und/oder kontaktiert der Einpresskontakt des weiteren Kontaktsegmentes eine Leiterplatte. Die Leiterplatte ist insbesondere Teil einer Sensorelektronikschaltung.

Die Erfindung führt ferner zu einem Verfahren zur Ausbildung eines Kontaktelementes aus einem Band- und/oder Blechmaterial, insbesondere einem erfindungsgemäßen Kontaktelementes nach einer der zuvor beschriebenen Ausführungsformen. Dabei ist vorgesehen, dass das Kontaktelement mit einem Grundkörper und einem an den Grundkörper anschließenden drahtförmigen Fortsatzes einstückig aus dem Band- und Blechmaterial ausgebildet wird. Ferner umfasst das Verfahren zumindest einen Schneidprozess und einen Umformprozess, wobei durch den zumindest einen Schneidprozess eine Außenkontur des Kontaktelementes erhalten wird und durch den zumindest einen Umformprozess ein Dickenmaß des Band- und/oder Blechmaterials im Bereich des drahtförmigen Fortsatzes gegenüber dem Grundkörper um einen Faktor von 4 bis 6 reduziert wird, wobei das Breitenmaß des drahtförmigen Fortsatzes das 1 bis 2-fache seines Dickenmaßes aufweist. In vorteilhafter Weise kann ein kompaktes Kontaktelement hergestellt werden, welches neben einem massiven Grundkörper einen Drahtkontakt integral umfasst. Auf diese Weise ist ein Fertigungsaufwand zur Ausbildung eines Kontaktelementes zur Kontaktierung eines Kontaktpartners über einen Drahtkontakt deutlich reduziert, wodurch Kosten für ansonsten benötigte weitere Fertigungseinrichtungen entfallen können.

Eine besonders vorteilhafte Ausführungsform des Verfahrens sieht vor, dass die Außenkontur und das Dickenmaß im Bereich des drahtförmigen Fortsatzes über einen mehrstufigen Schneid- und Umformprozess erhalten werden. Hierbei wird zumindest in einem ersten Schneidprozess eine Vorkontur als breiterer Vorschnitt der Außenkontur und zumindest in einem letzten Schneidprozess eine Endkontur der Außenkontur ausgebildet. Ferner wird nach dem ersten Schneidprozess und vor dem letzten Schneidprozess das Dickenmaß ausgehend von einem ersten Umformprozess über mehrere Stufenmaße bis auf ein Endmaß im letzten Umformprozess reduziert. Durch einen Umformprozess zur Reduzierung des Dickenmaßes kommt es zu einem seitlichen Verfließen des Band- und/oder Blechmaterials, wodurch ein Nachschneiden des Breitenmaßes erforderlich wird. Der Umformprozess führt ferner auch zu einer Materialverfestigung bzw. -verhärtung. Mit zunehmender Materialverfestigung bzw. -verhärtung werden bevorzugt die Stufenmaße mit jedem nachfolgenden Umformprozess verkleinert. Insgesamt ist dadurch ermöglicht, das Kontaktsegment in Form des drahtförmigen Fortsatzes mit hoher Maßpräzision zu fertigen. Zusätzlich ist der Effekt bewirkt, dass durch die sich ergebende Materialverfestigung ein hochmechanisch beanspruchbares Kontaktsegment hergestellt werden kann.

Eine sehr einfache und kostengünstige Verfahrensform ergibt sich dadurch, dass der Schneidprozess durch einen Stanzvorgang und/oder der Umformprozess durch einen Prägevorgang erfolgt.

In einer besonderen Ausführungsform ist vorgesehen, dass mehrere Kontaktelemente in einem fortlaufenden Stanzband als Stanzbandverbund ausgebildet werden. Dabei wird jedes Kontaktelement noch über zumindest eine Verbindungsstelle aus dem Band- und/oder Blechmaterial im Stanzbandverbund gehalten und erst vor der Montage vereinzelt, indem die jeweils zumindest eine Verbindungsstelle durchtrennt wird. In einer solchen Form kann das Kontaktelement insbesondere innerhalb einer Massenfertigung in großen Stückzahlen kostengünstig hergestellt werden.

Die zeitlich begrenzte Anordnung mehrerer Kontaktelement innerhalb eines fortlaufenden Stanzbandes ermöglicht es, dass jeweils ein filigran ausgebildetes Kontaktsegment eines Kontaktelementes im Form des drahtförmigen Fortsatzes sowohl mechanisch geschützt wird als auch in einem optionalen galvanischen Beschichtungsprozess, beispielsweise innerhalb einer Bandgalvanikanlage, vollständig oder teilweise selektiv beschichtet werden kann. Denkbar ist eine selektive Beschichtung des einen freiliegenden Endes als Kontaktfuß, mittels welchen eine elektrische Kontaktierung eines Kontaktpartners vorgesehen ist. Hierbei sind galvanische Oberflächen, insbesondere Schichten aus Ni, Au, Ag, Sn) einzeln oder kombiniert denkbar.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnung. Diese zeigt in:
Fig. la: einen gemäß dem Stand der Technik bekannter Ultraschallsensor in einer geschnittenen Seitenansicht,
Fig. 1b: der Ultraschallsensor aus Fig. la in einer Draufsicht,
Fig. 2: Ultraschallsensor mit einem mittels eines erfindungsgemäßen Kontaktelementes kontaktierten Sensorelements in einer ausschnittsweise gezeigten Seitenschnittdarstellung,
Fig. 3: Stanzbandverbund umfassend mehrere über Verbindungsstellen gehaltene Kontaktelemente,
Fig. 4: drahtförmiger Fortsatz eines Kontaktelementes mit Darstellung von Prägestufen.

### Ausführungsformen der Erfindung

In den Figuren sind funktional gleiche Bauteile jeweils mit gleichen Bezugszeichen gekennzeichnet.

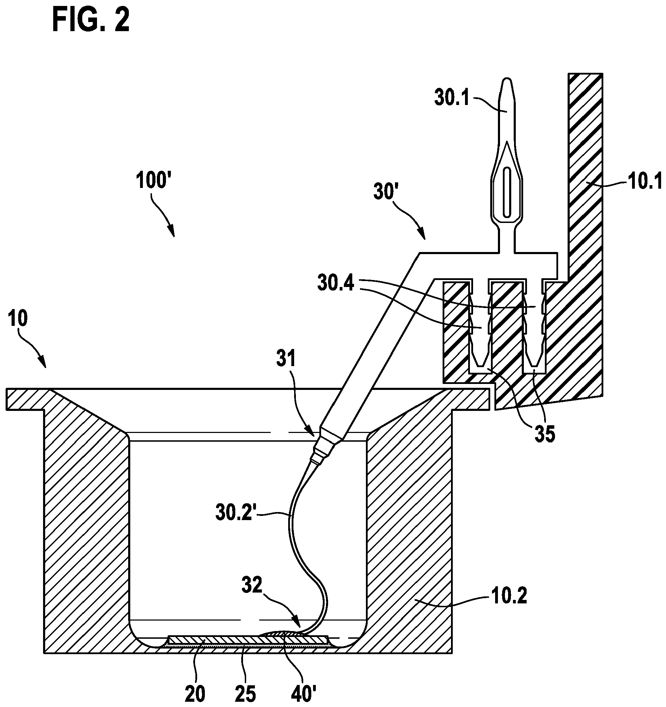

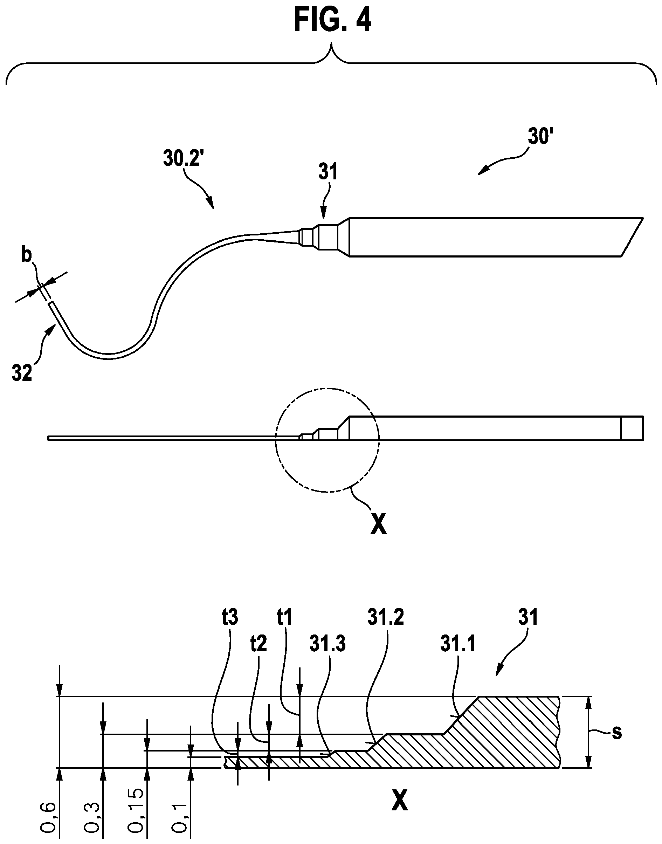

In der Fig. 2 ist ein Ultraschallsensor 100' in einer geschnittenen Seitenansicht dargestellt, vergleichbar zu dem bereits in Fig. 1a und 1b gezeigten. Zur Vereinfachung sind einige Komponenten ausgeblendet, beispielsweise ist auch nur ein Teil des Grundgehäuses 10.1 gezeigt. Am Bodengrund des Membrantopfes 10.2 ist weiterhin ein Sensorelement 20, beispielsweise ein Piezo-Schwinger, angeordnet. Hierfür ist das Sensorelement 20 unterseitig über beispielsweise eine Klebeschicht 25 fest mit dem Bodengrund verbunden. Die auf der Oberseite des Sensorelementes 20 ausgebildeten Elektroden sind jeweils nun mit einem erfindungsgemäßen Kontaktelement 30' elektrisch kontaktiert. Das Kontaktelement 30' ist bevorzugt im Wesentlichen als Stanzteil aus einem Band-und/oder Blechmaterial ausgebildet. Hierbei umfasst das Kontaktelement 30' zumindest ein erstes Kontaktsegment 30.1, welches beispielsweise als Einpresskontakt ausgebildet ist. Ferner umfasst das Kontaktelement 30' ein zweites Kontaktsegment 30.2', welches als drahtförmiger Fortsatz ausgeführt ist. Der drahtförmige Fortsatz 30.2' ist dabei einstückig mit dem restlichen Grundkörper des Kontaktelementes 30' aus dem Band- und/oder Blechmaterial gebildet. Die Fig. 4 zeigt den drahtförmigen Fortsatz 30.2' einer bevorzugten Ausführungsform des Kontaktelementes 30'. Das Kontaktelement 30' ist hierbei aus einem Band- und/oder Blechmaterial aus einer insbesondere gewalzten Bronzelegierung hergestellt, beispielsweise aus CuSn6. Der drahtförmige Fortsatz 30.2' ist mit einem gekrümmten Verlauf, insbesondere in S-Form, als Federelement ausgebildet. Der Verlauf lässt sich durch eine Formgebung des Stanzwerkzeuges festlegen und ist in einer Ebene des Band- und/oder Blechmaterials ausgebildet. Das eine Ende des drahtförmigen Fortsatzes 30.2' schließt in einem Übergangsbereich 31 an den restlichen massiven Grundkörper des Kontaktelementes 30' an. Das andere Ende wiederrum ist zum Grundkörper freiliegend und als Kontaktfuß 32 ausgebildet. Die Ausgangsmaterialstärke s des Band- und Blechmaterials ist in einem Bereich von 0,4 mm - 0.8 mm vorgesehen und beispielsweise mit 0,6 mm festgelegt. Im Bereich des drahtförmigen Fortsatzes 30.2' ist ein Dickenmaß des Band- und/oder Blechmaterials auf ein Maß zwischen 0,05 mm und 0,3 mm reduziert, beispielsweise auf 0.1 mm. Die Reduzierung des Dickenmaßes erfolgt bevorzugt durch einen ein- oder mehrstufigen Prägeprozess. Fig. 4 zeigt ein Abprägen über einen 3-stufigen Prägeprozess unter Ausbildung von drei Prägestufen 31.1, 31.2, 31.3 im Übergangsbereich 31. Jede Prägestufe 31.1, 31.2, 31.3 ist durch ein beim Prägevorgang eingestelltes Stufenmaß t1, t2, t3 erhalten. Bevorzugt gilt t3<t2<t1. Beispielsweise ist das Dickenmaß durch das erstes Stufenmaß t1 mit Ausbildung der ersten Prägestufe 31.1 auf 0,3 mm, durch das zweite Stufenmaß t2 mit Ausbildung der zweiten Prägestufe 31.2 auf 0,15 mm und durch das dritte Stufenmaß 31.3 mit Ausbildung der dritten Prägestufe 31.3 auf ein Endmaß von 0,1 mm reduziert. Aufgrund der zunehmenden Umformvorgänge weist die Materialverfestigung ausgehend von der ersten Prägestufe 31.1 bis zur letzten Prägestufe 31.3 jeweils einen größeren Wert auf. Ein Breitenmaß b des drahtförmigen Fortsatzes 30.2' ist bevorzugt in einem Bereich von 0.1 mm - 0.2 mm vorgesehen und beispielsweise auf 0,15 mm festgelegt.

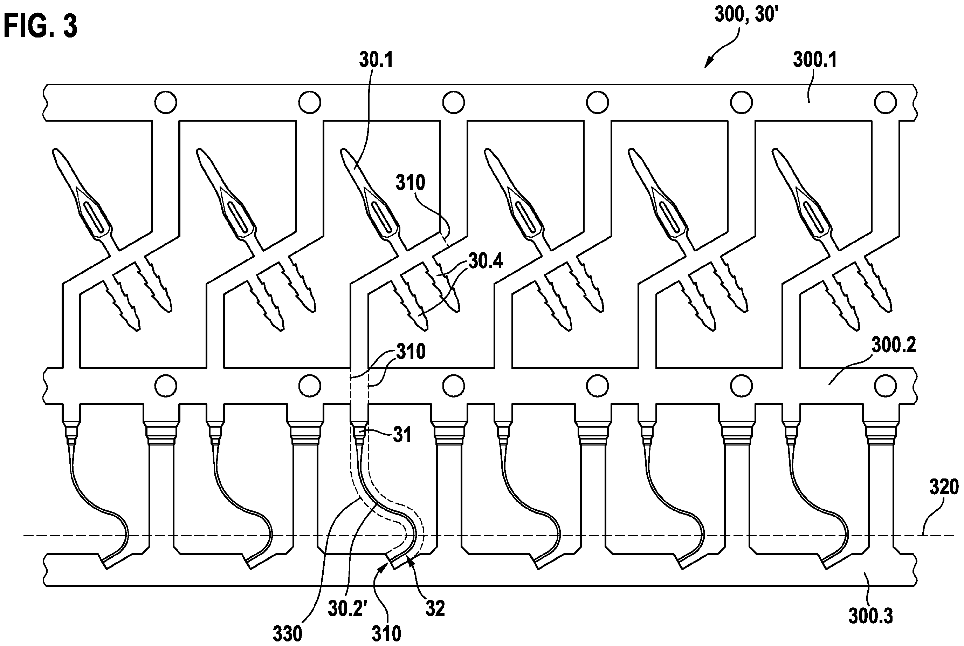

Die Fertigung der Außenkontur des Kontaktelementes 30' erfolgt bevorzugt durch einen Stanzvorgang in einem Stanzband. Fig. 3 zeigt die Ausbildung mehrerer Kontaktelemente 30' innerhalb eines Stanzbandverbundes 300 eines fortlaufenden Stanzbandes. Hierbei ist die Außenkontur eines jeweiligen Kontaktelementes 30' bereits im Wesentlichen ausgebildet, bis auf noch verbleibende Verbindungsstellen 300.1, 300.2, 300.3 aus dem Band- und/oder Blechmaterial, wodurch die Kontaktelemente 30' im Stanzbandverbund 300 gehalten werden. Erst kurz vor der Montage können diese vereinzelt werden, indem die Verbindungsstellen 300.1, 300.2, 300.3 an vorgesehenen Trennstellen 310 durchtrennt werden. Die Außenkontur im Bereich des drahtförmigen Fortsatzes 30.2' wird über mehrere Freistanzprozesse erhalten und im Wechsel zu den zuvor genannten Prägevorgängen ausgeführt. Zuerst wird der vorgesehene Verlauf, beispielsweise eine S-Grundform, als breiterer Vorschnitt 330 im Stanzband freigestanzt. Danach erfolgt das erste Abprägen auf die erste Prägestufe 31.1. Das Freistanzen ist notwendig, da das Material durch das Prägen fließt und "Freiraum" für dieses Fliesen im Stanzband geschaffen werden muss. Je dünner der Vorschnitt umso weniger Presskraft wird benötigt und umso genauer ist das Ergebnis. Danach wird ein zweites Mal vorgeschnitten (dünner als der erste Vorschnitt) und anschließend auf die zweite Prägestufe 31.2 verprägt. Danach erfolgt dieser Ablauf ein drittes Mal. Abschließend wir die endgültige Breite b des drahtförmigen Fortsatzes in seiner Endkontur zugestanzt. Damit sich die dünne Struktur des drahtförmigen Fortsatzes 30.2' herstellen lässt, sind u.U. Hilfsstrukturen in jeder Prägestufe 31.1, 31.2, 31.3 notwendig, z.B. Führungslöcher, die mit jeder Prägestufe 31.1, 31.2, 31.3 entfernt werden. Mit einem der zuvor genannten Stanzvorgänge oder mit zumindest einem weiteren ist in jeweils einem Kontaktelement 30' auch die Außenkontur einer Füge- und/oder Rastmöglichkeit 30.4 zur mechanischen Montage des Kontaktelementes 30' in ein Gehäuse 10 und/oder zumindest das weitere Kontaktsegment 30.1 einstückig im Band- und/oder Blechmaterial ausgebildet. Die Ausbildung als Einpresskontakt wird durch einen zusätzlichen Umformprozess erhalten, durch welchen eine Endform des weiteren Kontaktsegmentes 30.1 definiert ausgeformt wird.

Durch die Fertigung innerhalb eines fortlaufenden Stanzbandes kann der Stanzbandverbund 300 auf Spulenkörper auf- und abgewickelt werden (reel-toreel-Fertigung). Einzelne oder mehrere der Stanz- und Umformprozesse können hierbei getaktet und/oder zeitgleich oder zeitlich hintereinander ausgeführt werden. Optional durchläuft das Stanzband eine Bandgalvanikanlage bei welcher bevorzugt ein unterer Bereich 320 des Stanzbandverbundes eine Beschichtung erhält. Bevorzugt wird auf diese Weise zumindest der Kontaktfuß 32 selektiv mit einer Schicht aus Ni, Au, Ag, oder Sn beschichtet. Der Transport und die Bereitstellung des Stanzbandverbundes 300 für eine Montagevorgang der einzelnen enthaltenden Kontaktelemente 30' erfolgt bevorzugt auf den Spulenkörpern.

Nach dem Vereinzeln eines Kontaktelementes 30' aus dem Stanzbandverbund 300 kann eine Montage und eine elektrische Kontaktierung zur Ausbildung eines Ultraschallsensors 100', wie in Fig. 2 dargestellt, sehr einfach erfolgen. Hierfür liegt das Gehäuse 10, umfassend zumindest den metallischen Membrantopf 10.2 und das Grundgehäuse 10.1, zusammen mit dem im Membrantopf 10.2 befestigten Sensorelement 20 als vormontierte Einheit vor. Bevorzugt erfolgt die Montage des Kontaktelementes 30' in das Gehäuse 10 automatisiert, beispielsweise mit einer gesteuerten Handlingseinheit. Die Ausbildung der elektrischen Kontaktierung des Sensorelementes 20 mit dem Kontaktelement 30' kann nun innerhalb des Sensorgehäuses 10 erfolgen. Bei der Montage des Kontaktelementes 30' in das Sensorgehäuse 10 durch Einführung der Füge-und/oder Rast-Elemente 30.4 in dafür vorgesehene Gehäuseöffnungen 35 (beispielsweise in Form von Sacklöchern) taucht der Kontaktfuß 32 des drahtförmigen Fortsatzes 30.2' in einen vorab auf der Oberseite des Sensorelementes 20 im Bereich der Elektroden applizierten elektrisch leitfähigen Klebstoff, bevorzugt in einen Silberleitkleber. Dieser kann den Kontaktfuß 32 aufgrund von Adhäsionskräften in seiner aufgesetzten Position halten. Der Klebstoff wird dann in einem nachfolgenden Thermoschritt ausgehärtet und dadurch die elektrische Verbindung zwischen dem drahtförmigen Fortsatz 30.2' und dem Sensorelement 20 sichergestellt. Alternativ kann der Kontaktfuß 32 mittels eines selektiven Lötprozess mit dem Sensorelement 20 verbunden werden. Es eignen sich darüber hinaus auch andere Verbindungstechniken, welche allgemein für einen Drahtkontakt - wie in der Ausführung gemäß den Fig. la und 1b eingesetzt - angewendet werden, wie beispielsweise ein Schweiß-oder Bondkontakt bzw. ein Thermokompressionsschweißkontakt.
In einem weiteren Montageprozess wird das Sensorelement 20 mittels des Kontaktelementes 30' mit einer Sensorelektronikeinheit (nicht gezeigt) verbunden. Hierfür wird über den Einpresskontakt 30.1 beispielsweise eine entsprechende Leiterplatte kontaktiert. Ein fertiggestellter Ultraschallsensors 100' findet bevorzugt Anwendung als ein Parkpilotsensor innerhalb eines Kraftfahrzeuges.

## Patentansprüche

1. Kontaktelement (30'), umfassend einen Grundkörper aus einem Band-und/oder Blechmaterial und zumindest ein mit dem Grundkörper verbundenes Kontaktsegment (30.1, 30.2'), welches ausgebildet ist, das Kontaktelement (30') mit einem Kontaktpartner, insbesondere einem elektrischen und/oder elektronischen Bauelement, elektrisch zu kontaktieren, wobei
das zumindest eine Kontaktsegment (30.2') als drahtförmiger Fortsatz ausgeführt ist, welcher einstückig mit dem Grundkörper aus dem Band- und/oder Blechmaterial gebildet ist und mit zumindest seinem einen Ende einen Übergangsbereich (31) ausbildet, welcher an den Grundkörper anschließt,
wobei das Band- und/oder Blechmaterial aus einer, insbesondere gewalzten, Bronzelegierung gebildet ist und zur mechanischen Entkopplung zum Grundkörper ein Dickenmaß (s) des Band- und/oder Blechmaterials im Bereich des drahtförmigen Fortsatzes (30.2') gegenüber dem Grundkörper um einen Faktor von 4 bis 6 reduziert ist und
ein Breitenmaß (b) des drahtförmigen Fortsatzes (30.2') das 1 bis 2-fache seines Dickenmaßes aufweist, und wobei, insbesondere durch einen ein- oder mehrstufigen Prägeprozess, zur Reduzierung des Dickenmaßes (s) im Übergangsbereich (31) zumindest eine Prägestufe (31.1, 31.2, 31.3) ausgebildet ist.

2. Kontaktelement (30') nach Anspruch 1,
**dadurch gekennzeichnet, dass**
der drahtförmige Fortsatz (30.2') mit seinem anderen Ende zur Kontaktierung des Kontaktpartners einen Kontaktfuß (32) ausbildet, welcher vom Grundkörper freiliegt.

3. Kontaktelement (30') nach Anspruch 2,
**dadurch gekennzeichnet, dass**
der Kontaktfuß (32) selektiv beschichtet ist, insbesondere mit zumindest einer Schicht aus Ni, Au, Ag und/oder Sn.

4. Kontaktelement (30') nach einem der vorhergehenden Ansprüche,
**dadurch gekennzeichnet, dass**
das Band- und/oder Blechmaterial aus CuSn6 gebildet ist.

5. Kontaktelement (30') nach einem der vorhergehenden Ansprüche,
**dadurch gekennzeichnet, dass**
das Kontaktsegment (30.2') als Federelement ausgebildet ist, wobei das Federelement bevorzugt durch einen gekrümmten Verlauf des drahtförmigen Fortsatzes (30.2') geformt ist, insbesondere als S-Form.

6. Kontaktelement (30') nach einem der vorhergehenden Ansprüche,
**dadurch gekennzeichnet, dass**
das Breitenmaß (b) des drahtförmigen Fortsatzes (30.2') das 1,5-fache seines Dickenmaßes aufweist.

7. Kontaktelement (30') nach einem der vorhergehenden Ansprüche,
**dadurch gekennzeichnet, dass**
das Kontaktelement (30'), insbesondere einstückig mit dem Grundkörper ausgebildet, eine Füge- und/oder Rastmöglichkeit (30.4) zur mechanischen Montage des Kontaktelementes (30') in ein Gehäuse (10) und/oder zumindest ein weiteres Kontaktsegment (30.1) umfasst, wobei das zumindest eine weitere Kontaktsegment (30.1) als Einpresskontakt ausgebildet ist.

8. Kontaktelement (30') nach einem der vorhergehenden Ansprüche,
**dadurch gekennzeichnet, dass**
das reduzierte Dickenmaß in einem Bereich zwischen 0,05 mm und 0,5 mm, bevorzugt in einem Bereich von 0,05 und 0,3 mm, ausgebildet ist.

9. Sensor (100'), beispielsweise Ultraschallsensor, umfassend ein Sensorgehäuse (10), ein Sensorelement (20), insbesondere einen Piezo-Schwinger, und ein Kontaktelement (30') nach einem der Ansprüche 1 bis 7, wobei das Sensorelement (20) von dem Kontaktsegment (30.2') elektrisch kontaktiert ist, insbesondere über den Kontaktfuß (32) des drahtförmigen Fortsatzes (32).

10. Sensor (100') nach Anspruch 9,
**dadurch gekennzeichnet, dass**
das Kontaktsegment (30.2') stoffschlüssig mit einem Anschlussbereich des Sensorelementes (20) verbunden ist, insbesondere mittels einer Lot-, Klebe-, Bond- oder Schweissverbindung.

11. Sensor (100') nach einem der Ansprüche 9 oder 10,
**dadurch gekennzeichnet, dass**
das Kontaktelement (30') mittels der Füge- und/oder Rastmöglichkeit (30.4) an dem Sensorgehäuse (10) montiert ist und/oder der Einpresskontakt (30.1) des weiteren Kontaktsegmentes eine Leiterplatte kontaktiert.

12. Verfahren zur Ausbildung eines Kontaktelementes (30') aus einem Band-und/oder Blechmaterial nach einem der Ansprüche 1 bis 8, wobei das Kontaktelement (30') mit einem Grundkörper und einem an den Grundkörper anschließenden drahtförmigen Fortsatzes (30.2') einstückig aus dem Band- und Blechmaterial ausgebildet wird, und wobei das Verfahren zumindest einen Schneidprozess und einen Umformprozess umfasst, wobei durch den zumindest einen Schneidprozess eine Außenkontur des Kontaktelementes (30') erhalten wird und durch den zumindest einen Umformprozess ein Dickenmaß des Band-und/oder Blechmaterials im Bereich des drahtförmigen Fortsatzes (30.2') gegenüber dem Grundkörper reduziert wird,
wobei das Band- und/oder Blechmaterial aus einer, insbesondere gewalzten, Bronzelegierung gebildet ist und und zur mechanischen Entkopplung zum Grundkörper das Dickenmaß (s) des Band- und/oder Blechmaterials im Bereich des Kontaktsegments (30.2') gegenüber dem Grundkörper um einen Faktor von 4 bis 6 reduziert wird, und
wobei das Breitenmaß (b) des drahtförmigen Fortsatzes (30.2') das 1 bis 2-fache seines Dickenmaßes aufweist.

13. Verfahren nach Anspruch 12,
**dadurch gekennzeichnet, dass**
die Außenkontur und das Dickenmaß im Bereich des drahtförmigen Fortsatzes (30.2') über einen mehrstufigen Schneid- und Umformprozess erhalten wird, wobei zumindest in einem ersten Schneidprozess eine Vorkontur als breiterer Vorschnitt (330) der Außenkontur und zumindest in einem letzten Schneidprozess eine Endkontur der Außenkontur ausgebildet wird, und wobei nach dem ersten Schneidprozess und vor dem letzten Schneidprozess das Dickenmaß ausgehend von einem ersten Umformprozess über mehrere Stufenmaße (t1, t2, t3) bis auf ein Endmaß im letzten Umformprozess reduziert wird, wobei bevorzugt die Stufenmaße (t1, t2, t3) mit jedem nachfolgenden Umformprozess verkleinert werden.

14. Verfahren nach einem der Ansprüche 12 oder 13,
**dadurch gekennzeichnet, dass**
der Schneidprozess durch einen Stanzvorgang und/oder der Umformprozess durch einen Prägevorgang erfolgt.

15. Verfahren nach einem der Ansprüche 12 bis 14,
**dadurch gekennzeichnet, dass**
mehrere Kontaktelemente (30') in einem fortlaufenden Stanzband als Stanzbandverbund (300) ausgebildet werden, wobei jedes Kontaktelement (30') über zumindest eine Verbindungsstelle (300.1, 300.2, 300.3) aus dem Band-und/oder Blechmaterial im Stanzbandverbund (300) gehalten wird und erst vor der Montage vereinzelt wird, indem die jeweils zumindest eine Verbindungsstelle (300.1, 300.2, 300.3) durchtrennt wird.

## Claims

1. Contact element (30'), comprising a main body, which is composed of a strip material and/or sheet material, and at least one contact segment (30.1, 30.2') which is connected to the main body and is designed to electrically contact-connect the contact element (30') to a contact partner, in particular an electrical and/or electronic component, wherein the at least one contact segment (30.2') is embodied as a wire-like projection which is integrally formed with the main body, which is composed of the strip material and/or sheet material, and, by way of at least its one end, forms a transition region (31) which adjoins the main body, wherein the strip material and/or sheet material is formed from an, in particular rolled, bronze alloy and, for decoupling from the main body, a thickness dimension (s) of the strip material and/or sheet material in the region of the wire-like projection (30.2') is reduced by a factor of from 4 to 6 in comparison to the main body, and a width dimension (b) of the wire-like projection (30.2') has 1 to 2 times the thickness dimension of said wire-like projection, and wherein at least one embossed step (31.1, 31.2, 31.3) is formed, in particular by a single-stage or multi-stage embossing process, for the purpose of reducing the thickness dimension (s) in the transition region (31).

2. Contact element (30') according to Claim 1,
**characterized in that**
the wire-like projection (30.2'), by way of its other end, forms a contact foot (32), which is free from the main body, for the purpose of making contact with the contact partner.

3. Contact element (30') according to Claim 2,
**characterized in that**
the contact foot (32) is selectively coated, in particular with at least one layer which is composed of Ni, Au, Ag and/or Sn.

4. Contact element (30') according to one of the preceding claims,
**characterized in that**
the strip material and/or sheet material is formed from CuSn6.

5. Contact element (30') according to one of the preceding claims,
**characterized in that**
the contact segment (30.2') is in the form of a spring element, wherein the spring element is preferably formed by a curved profile of the wire-like projection (30.2'), in particular in the form of an S shape.

6. Contact element (30') according to one of the preceding claims,
**characterized in that**
the width dimension (b) of the wire-like projection (30.2') has 1.5 times the thickness dimension of the said wire-like projection (30.2').

7. Contact element (30') according to one of the preceding claims,
**characterized in that**
the contact element (30'), in particular in a manner integrally formed with the main body, comprises a joining facility and/or latching facility (30.4) for mechanically fitting the contact element (30') into a housing (10) and/or at least one further contact segment (30.1), wherein the at least one further contact segment (30.1) is in the form of a press-in contact.

8. Contact element (30') according to one of the preceding claims,
**characterized in that**
the reduced thickness dimension is defined in a range of between 0.05 mm and 0.5 mm, preferably in a range of between 0.05 and 0.3 mm.

9. Sensor (100'), for example ultrasonic sensor, comprising a sensor housing (10), a sensor element (20), in particular a piezooscillator, and a contact element (30') according to one of Claims 1 to 7, wherein the contact segment (30.2') makes electrical contact with the sensor element (20), in particular by means of the contact foot (32) of the wire-like projection (32).

10. Sensor (100') according to Claim 9,
**characterized in that**
the contact segment (30.2') is cohesively connected to a connection region of the sensor element (20), in particular by means of a soldered connection, adhesive connection, bonded connection or welded connection.

11. Sensor (100') according to either of Claims 9 and 10,
**characterized in that**
the contact element (30') is fitted to the sensor housing (10) by means of the joining facility and/or latching facility (30.4) and/or the press-in contact (30.1) of the further contact segment makes contact with a printed circuit board.

12. Method for forming a contact element (30') from a strip material and/or sheet material according to one of Claims 1 to 8, wherein the contact element (30') comprising a main body and a wire-like projection (30.2') which adjoins the main body is integrally formed from the strip material and sheet material, and wherein the method comprises at least one cutting process and one shaping process, wherein an outer contour of the contact element (30') is obtained by way of the at least one cutting process and a thickness dimension of the strip material and/or sheet material in the region of the wire-like projection (30.2') is reduced in comparison to the main body by way of the at least one shaping process, wherein the strip material and/or sheet material is formed from an, in particular rolled, bronze alloy and, for decoupling from the main body, the thickness dimension(s) of the strip material and/or sheet material in the region of the contact segment (30.2') is reduced by a factor of from 4 to 6, in comparison to the main body, and a width dimension (b) of the wire-like projection (30.2') has 1 to 2 times the thickness dimension of the said wire-like projection (30.2').

13. Method according to Claim 12,
**characterized in that**
the outer contour and the thickness dimension in the region of the wire-like projection (30.2') are obtained by means of a multi-stage cutting and shaping process, wherein a preliminary contour is formed as the wider preliminary cut (330) of the outer contour at least in a first cutting process and an end contour of the outer contour is formed at least in a last cutting process, and wherein, after the first cutting process and before the last cutting process, the thickness dimension is reduced starting from a first shaping process, over a plurality of step dimensions (t1, t2, t3), down to an end dimension in the last shaping process, wherein the step dimensions (t1, t2, t3) are preferably decreased with each subsequent shaping process.

14. Method according to either of Claims 12 and 13,
**characterized in that**
the cutting process is performed by a stamping operation and/or the shaping process is performed by an embossing operation.

15. Method according to one of Claims 12 to 14,
**characterized in that**
a plurality of contact elements (30') are formed in the form of a stamping strip assembly (300) in a continuous stamping strip, wherein each contact element (30') is held in the stamping strip assembly (300) by means of at least one connecting point (300.1, 300.2, 300.3) which is composed of the strip material and/or sheet material, and is separated, by the respectively at least one connecting point (300.1, 300.2, 300.3) being severed, only before fitting.

## Revendications

1. Élément de contact (30'), comprenant un corps de base constitué d'un matériau en bande et/ou en tôle et au moins un segment de contact (30.1, 30.2') relié au corps de base, lequel est configuré pour amener l'élément de contact (30') en contact électrique avec un partenaire de contact, notamment un composant électrique et/ou électronique, l'au moins un segment de contact (30.2') étant réalisé sous la forme d'un prolongement en forme de fil qui est formé d'un seul tenant avec le corps de base constitué d'un matériau en bande et/ou en tôle et forme avec au moins l'une de ses extrémités une zone de transition (31) qui se rattache au corps de base,
le matériau en bande et/ou en tôle étant formé à partir d'un alliage de bronze, notamment laminé, et une cote d'épaisseur (s) du matériau en bande et/ou en tôle étant réduite d'un facteur de 4 à 6 dans la zone du prolongement en forme de fil (30.2') par rapport au corps de base en vue du découplage mécanique du corps de base et
une cote de largeur (b) du prolongement en forme de fil (30.2') présentant 1 à 2 fois sa cote d'épaisseur et au moins un gradin matricé (31.1, 31.2, 31.3) étant formé, notamment par un processus de matriçage en une ou plusieurs étapes, en vue de réduire la cote d'épaisseur (s) dans la zone de transition (31).

2. Élément de contact (30') selon la revendication 1, **caractérisé en ce que** le prolongement en forme de fil (30.2') forme avec son autre extrémité, en vue d'établir un contact électrique avec le partenaire de contact, un pied de contact (32) qui est dégagé du corps de base.

3. Élément de contact (30') selon la revendication 2, **caractérisé en ce que** le pied de contact (32) est pourvu d'un revêtement sélectif, notamment avec une couche de Ni, d'Au, d'Ag et/ou de Sn.

4. Élément de contact (30') selon l'une des revendications précédentes, **caractérisé en ce que** le matériau en bande et/ou en tôle est constitué de CuSn6.

5. Élément de contact (30') selon l'une des revendications précédentes, **caractérisé en ce que** le segment de contact (30.2') est réalisé sous la forme d'un élément ressort, l'élément ressort étant de préférence façonné par un tracé curviligne du prolongement en forme de fil (30.2'), notamment en forme de S.

6. Élément de contact (30') selon l'une des revendications précédentes, **caractérisé en ce que** la cote de largeur (b) du prolongement en forme de fil (30.2') est égale à 1,5 fois sa cote d'épaisseur.

7. Élément de contact (30') selon l'une des revendications précédentes, **caractérisé en ce que** l'élément de contact (30') est notamment réalisé d'un seul tenant avec le corps de base, comporte une possibilité de jointage et/ou d'encliquetage (30.4) servant au montage mécanique de l'élément de contact (30') dans un boîtier (10) et/ou au moins un segment de contact supplémentaire (30.1), l'au moins un segment de contact supplémentaire (30.1) étant réalisé sous la forme d'un contact à enfoncer.

8. Élément de contact (30') selon l'une des revendications précédentes, **caractérisé en ce que** la cote d'épaisseur réduite est formée dans une plage entre 0,05 mm et 0,5 mm, de préférence dans une plage entre 0,05 et 0,3 mm.

9. Capteur (100'), par exemple capteur d'ultrasons, comprenant un boîtier de capteur (10), un élément capteur (20), notamment un oscillateur piézoélectrique, et un élément de contact (30') selon l'une des revendications 1 à 7, l'élément capteur (20) étant mis en contact électrique par le segment de contact (30.2'), notamment par le biais du pied de contact (32) du prolongement en forme de fil (32).

10. Capteur (100') selon la revendication 9, **caractérisé en ce que** le segment de contact (30.2') est relié par fusion de matières à la zone de raccordement de l'élément capteur (20), notamment au moyen d'une liaison brasée, collée, connectée ou soùdée.

11. Capteur (100') selon l'une des revendications 9 ou 10, **caractérisé en ce que** l'élément de contact (30') est monté sur le boîtier de capteur (10) au moyen de la possibilité de jointage et/ou d'encliquetage (30.4) et/ou le contact à enfoncer (30.1) du segment de contact supplémentaire établit le contact avec un circuit imprimé.

12. Procédé de formation d'un élément de contact (30') à partir d'un matériau en bande et/ou en tôle selon l'une des revendications 1 à 8, l'élément de contact (30') étant formé d'un seul tenant avec un corps de base et un prolongement en forme de fil (30.2') qui se rattache au corps de base à partir du matériau en bande et/ou en tôle, le procédé comprenant au moins un processus de découpe et un processus de façonnage, un contour extérieur de l'élément de contact (30') étant obtenu par l'au moins un processus de découpe et une cote d'épaisseur du matériau en bande et/ou en tôle étant réduite dans la zone du prolongement en forme de fil (30.2') par rapport au corps de base par l'au moins un processus de façonnage, le matériau en bande et/ou en tôle étant formé à partir d'un alliage de bronze, notamment laminé, et la cote d'épaisseur (s) du matériau en bande et/ou en tôle étant réduite d'un facteur de 4 à 6 dans la zone du segment de contact (30.2') par rapport au corps de base en vue du découplage mécanique du corps de base et
la cote de largeur (b) du prolongement en forme de fil (30.2') présentant 1 à 2 fois sa cote d'épaisseur.

13. Procédé selon la revendication 12, **caractérisé en ce que** le contour extérieur et la cote d'épaisseur dans la zone du prolongement en forme de fil (30.2') est obtenue par un processus de découpe et de façonnage en plusieurs étapes, un précontour sous la forme d'une coupe préparatoire plus large (330) du contour extérieur étant formé dans un premier processus de découpe et un contour final du contour extérieur au moins dans un dernier processus de découpe et, après le premier processus de découpe et avant le dernier processus de découpe, la cote d'épaisseur étant réduite à partir d'un premier processus de façonnage en plusieurs cotes de gradin (t1, t2, t3) jusqu'à une cote finale dans le dernier processus de façonnage, les cotes de gradin (t1, t2, t3) étant de préférence réduites avec chaque processus de façonnage suivant.

14. Procédé selon la revendication 12 ou 13, **caractérisé en ce que** le processus de découpe est réalisé par une opération d'estampage et/ou le processus de façonnage par une opération de matriçage.

15. Procédé selon l'une des revendications 12 à 14, **caractérisé en ce que** plusieurs éléments de contact (30') sont formés dans une bande à estamper continue sous la forme d'un composé de bande à estamper (300), chaque élément de contact (30') étant maintenu dans le composé de bande à estamper (300) par le biais d'au moins un point de liaison (300.1, 300.2, 300.3) constitué du matériau en bande et/ou en tôle et n'étant séparé qu'avant le montage en sectionnant l'au moins un point de liaison (300.1, 300.2, 300.3) respectif.
